# EUROPEAN PATENT APPLICATION

(11) **EP 3 057 315 A1**
(43) Date of publication of application: **17.08.2016**
(21) Application number: 14852200.6
(22) Date of filing: 26.01.2014
(51) Int. Cl.: H04N 9/31

(54) **DIGITAL MOVIE PROJECTION SYSTEM AND METHOD**

(30) Priority: 11.10.2013 CN 201310473990
(71) Applicant: China Film Digital Giant Screen (Beijing) Co. Ltd., Beijing 101400 (CN)
(72) Inventor: LIN, Minjie, Beijing 101400 (CN); HE, Wei, Beijing 101400 (CN)
(74) Representative: Conroy, John
(86) International application number: PCT/CN2014/071472
(87) International publication number: WO 2015/051612

(57) **Abstract**

A digital movie projection system and method is disclosed, wherein the digital movie projection system comprises a projector system and an image acquisition and analysis system; the projector system is provided therein with a video input module (such as an IMB integrated media module), an image optimization processing module, and a video output module (such as an ICP integrated control module); and the image optimization processing module is electrically connected to the video input and output modules and the image acquisition and analysis system provided outside the projector system, respectively. The image optimization processing module and the video input and output modules are integrated in the projector system, and the image optimization processing module is electrically connected to the video input and output modules respectively and built in the projector system, ensuring the security and stability of image information throughout the movie projection process.

## Description

### Technical Field

The present invention relates to a technical field of manufacture of image display devices, and particularly to a digital movie projection system and method.

### Background Art

A digital movie projection system in the prior art mainly comprises one server for outputting a video signal and one projector projecting the video signal onto a screen.

There is a further favorable projection system in which an image optimization processing device is generally provided additionally between a projector and a server to optimize the projection effect. The image optimization processing device is in connection and video signal transmission with the projector and the server by a coaxial cable and a BNC connector, with the coaxial cable, as a signal transmission medium, having a potential safety hazard in the data transmission and the limited data transmission rate (i.e., bandwidth is small), thus it cannot completely meet the requirements for a new movie format which projects content with a high frame rate and high-resolution and keeps video signals confidential.

To sum up, a technical problem that is not easily solved in the prior art is how to ensure security of video signals during transmission while ensuring high quality projection and high bandwidth data transmission in a digital movie projection system.

### Disclosure of the Invention

The present invention provides a digital movie projection system and a method, for addressing the technical deficiency of the prior art that image data is transmitted at a low rate and the security of video signal transmission is not ensured.

In view of the problem described above, the present invention provides a digital movie projection system, comprising a projector system and an image acquisition and analysis system.

The projector system is provided therein with a video input module, a video output module, and an image optimization processing module, wherein the image optimization processing module is electrically connected to the video input module, the video output module, and an image acquisition and analysis system provided outside the projector system, respectively.

The image acquisition and analysis system is configured for acquiring real projected image information on a screen, analyzing the real projected image information, and transmitting the same to the image optimization processing module.

The video input module inputs original video and information to the image optimization processing module.

The image optimization processing module is configured for analyzing the real projected image information acquired from the image acquisition and analysis system to obtain an image optimization processing parameter, comparing and compensating the input original image with the image optimization processing parameter, and transmitting, to the video output module, the image information after the optimization process.

The video output module is configured for outputting and projecting, onto the screen, the image which has been subjected to the optimization process of the image optimization processing module.

The video input module includes an IMB integrated media module.

The video output module includes an ICP integrated control module.

Correspondingly, the present invention further provides a digital movie projection method, comprising the steps of:
a video input module outputting original image information to an image optimization processing module;
an image acquisition and analysis system acquiring real projected image information on a screen, analyzing the real projected image information, creating an image optimization processing parameter and transmitting the image optimization processing parameter to the image optimization processing module;
the image optimization processing module comparing and compensating with the parameter obtained from the real projected image information and outputting the optimized image information; and
the video output module, through other modules of the projector system, finally projecting onto the screen the image output by the image optimization processing module.

The present invention has the following advantageous effects:
as seen from analysis of the above-mentioned structure, first, the video input module (for example, an IMB integrated media module), which may serve as a built-in server, is a structure substituting for the traditional server independently provided outside the projector system. The video input module can be built in the digital projector system, to serve as a core part of the digital movie projection system, by replacing the external server, with basic functions including unpacking and unpackaging, decryption, and image decompression of data packets of a digital movie, to generate uncompressed reconstructed images, voice and subtitles and output safely the same to other modules of the projector system for realizing movie projection.

The key point is that the image optimization processing module, which is also built in the projector system, can optimize the quality of an image picture and improve the projection effects including, but not limited to, indexes such as registration of dual projectors, contrast ratio, color, and uniformity. Here, the video output module is built in the projector system and cooperates with other module devices of the projector system to project the picture onto the screen.

The image optimization processing module and the video input and output modules are all built in the projector system, wherein a data bus interface (for example, a LVDS interface) is in a bus structure, avoiding the situation in the prior art where an external structure is affected by a low transmission rate of a coaxial cable when using the coaxial cable and a BNC terminal as a transmission medium. Thus the image optimization processing module and the video input and output modules can transmit signals among them directly through an integrated structure, so as to be adapted to high speed transmission of image information with high resolution and high frame rate of a future movie format. Moreover, when such a structure transmits image information, video data can be transmitted more confidentially without being encrypted, since no transmission connection for video signals (for example, the coaxial cable) is needed and all the video and image signals are transmitted within the projector system having confidential protection.

### Brief Description of Drawings

Fig. 1 is a structural schematic diagram of an example of a digital movie projection system of the present invention.
Fig. 2 is a structural schematic diagram of an image optimization processing module of the digital movie projection system of the present invention.
Fig. 3 is a structural schematic diagram of the digital movie projection system comprising an external image capture device of the present invention.
Fig. 4a is a structural schematic diagram of an example of the digital movie projection system of the present invention.
Fig. 4b is a structural schematic diagram of another example of the digital movie projection system of the present invention.
Fig. 5 is a structural schematic diagram of multi-system synchronous processing of the digital movie projection system of the present invention.
Fig. 6a is a partial structural schematic diagram of an example of the digital movie projection system of the present invention.
Fig. 6b is a partial structural schematic diagram of another example of the digital movie projection system of the present invention.
Fig. 7 is a schematic flowchart of a digital movie projection method provided by the present invention.

### Detailed Description of Embodiments

Embodiments of a digital movie projection system and method provided by the present invention are described hereinafter with reference to the drawings.

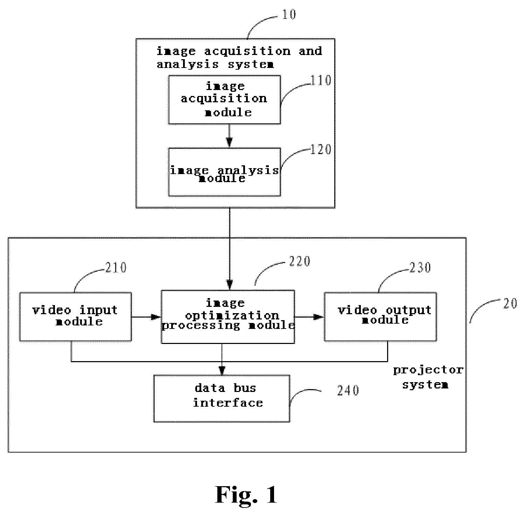

Referring to Fig. 1, an example of the present invention provides a digital movie projection system comprising a projector system 20 and an image acquisition and analysis system 10, wherein the projector system 20 is provided therein with a video input module 210, an image optimization processing module 220 and a video output module 230; and the image optimization processing module 220 is electrically connected to the video input module 210, the video output module 230, and the image acquisition and analysis system 10 provided outside the projector system 20, respectively.

The image acquisition and analysis system 10 is configured for acquiring real projected image information on a screen, analyzing the real projected image information, and transmitting the same to the image optimization processing module 220.

The video input module 210 inputs original video and information to the image optimization processing module 220; and moreover, the video input module (such as an IMB integrated media module) is a built-in server substituting for the structure of a traditional server independently provided outside the projector system.

The image optimization processing module 220 is configured for analyzing the real projected image information acquired from the image acquisition and analysis system to obtain an image optimization processing parameter, comparing and compensating the input original image with the image optimization processing parameter, and transmitting, to the video output module, the image information after the optimization process.

The video output module 230 is built in the projector system for outputting and projecting, onto the screen, the image which has been subjected to the optimization process of the image optimization processing module.

The projector system 20 further comprises therein a data bus interface 240 (such as LVDS) through which the image optimization processing module can be electrically connected to the video input module and the video output module respectively.

Here, the LVDS has a high transmission rate, a large bandwidth, and a good image signal, and is more adaptive to a new movie format. The LVDS has a theoretical bandwidth of 20 Gbits. The digital movie projection system according to the example of the present invention generally requires a bandwidth of 1.7 Gbits at a resolution of 2K and 7 Gbits at a resolution of 4K, and the LVDS completely meets the requirements for an interface transmission rate in the digital movie projection system according to the example of the present invention.

It should be noted that the image optimization processing module 220, in combination with the video input module 210 and the video output module 230, is built in the projector system 20, thereby ensuring the security and stability of image information throughout the movie projection process.

As seen from analysis of the above-mentioned structure, first, the video input module 210, as a built-in server, is a structure substituting for the traditional server independently provided outside the projector system, can be built in the digital projector to serve as a core part of the digital movie projection system by replacing the external server, and has basic functions including unpacking and unpackaging, decryption, and image decompression of data packets of a digital movie and the like to generate uncompressed reconstructed images, voice and subtitles and output confidentially the same to the image optimization processing module 220. Moreover, the image optimization processing module can optimize the quality of the image picture, and the image signal which has been subjected to the optimization process is further outputted by a safe method to the video output module 230 for realizing movie projection, with the safe method allowing it to be built in the projector system.

The image optimization processing module 220, the video input module 210, and the video output module 230 are all built in the digital projector, avoiding that an external structure of the prior art is affected by a low transmission rate of a coaxial cable when using the coaxial cable as a transmission medium, thus the image optimization processing module can transmit a signal directly through an integrated structure and be adapted to high speed transmission of image information with high resolution and high frame rate. This design of the hardware structure ensures the security and stability of image information throughout the movie projection process.

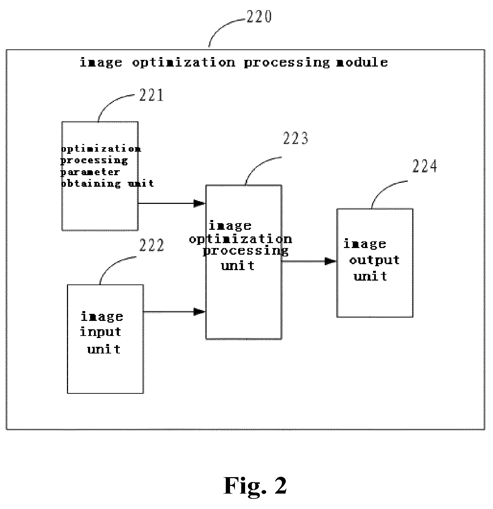

Preferably, as a possible embodiment, referring to Fig. 2, the image optimization processing module 220 comprises an optimization processing parameter obtaining unit 221, an image input unit 222, an image optimization processing unit 223, and an image output unit 224, wherein
the optimization processing parameter obtaining unit 221 is configured for obtaining an image optimization processing parameter from the image acquisition and analysis system, and outputting the image optimization processing parameter to the image optimization processing unit 223;
the image input unit 222 is configured for obtaining original image information from the video input module of the projector system, and outputting the original image information to the image optimization processing unit 223; and
the image optimization processing unit 223 is configured for comparing and compensating the original image information outputted from the image input unit 222 with the parameter outputted from the optimization processing parameter obtaining unit 221, and outputting, by the image output unit 224, the image information after the optimization process. Here, it should be noted that the image optimization processing parameter includes, but is not limited to, an image capture parameter, brightness, color uniformity, geometrical shape, image sharpness, contrast ratio, and so on.

A digital movie projection system provided by the example of the present invention is provided with an image acquisition and analysis system and an image optimization processing module to obtain and analyze an image being projected on the screen, and to project the image by the digital movie projector, after the image optimization processing module correcting the image to be projected, based on the result of analysis, thus the quality of the corrected image is improved so that the quality of the projected image is upgraded, ensuring the quality of the projected image.

Preferably, as a feasible embodiment, the image optimization processing module 220 may be realized on the basis of an electronic circuit including such as an FPGA (Field-Programmable Gate Array) chip and an MCU, GPU, or ARM processor.

It should be noted that one of key points of the digital movie projector system according to the example of the present invention is that the image quality is improved by the image optimization processing module which can be realized by a hardware chip structure, so as to avoid the disadvantages in the traditional technology that the information is processed by software of an externally provided system. Thus the whole structure is more stable and more confidential and has a faster operation processing speed. The FPGA-based electronic circuit according to the example of the present invention has the following hardware structure:
a large scale integrated chip, such as FPGA, which is currently a high-end chip with relatively stable performance (the chip is integrated on a control motherboard which further comprises other elements such as an interface device, a peripheral circuit, and a serial port) is mainly used as the hardware device of the image optimization processing module, with the chip being designed and developed to have functions such as comparing and compensating index parameters of image information.

Moreover, taking an FPGA chip as an example for description, the FPGA chip, as a control core element, is integrated with the above-mentioned various function units for realizing various functions. The FPGA chip can be configured for example, but not limited to, to have: up to 500,000 logic gates (resource); a clock with a 50 MHz active crystal oscillator and a 12 MHz active crystal oscillator; a 64M SDRAM16-bit data interface; a 256Kx16Bit high speed SRAM memory having a capacity of 4 Mbit; and a memory configurable for the FPGA, thus the FPGA chip has a high performance operation processing capability, and for example, the FPGA chip can process video data based on the preset parameter rapidly and in realtime, performing corresponding operations.

It should be understood by those skilled in the art that developers may develop the functions of the FPGA chip by using assembly language or C language (for instance Verilog HDL Hardware Programming Language), and after recording programs to the FPGA chip, the developers integrate related circuits onto the control motherboard to realize an entire control circuit.

Preferably, the image optimization processing module 220 is integrated with other components through an LVDS interface (Low Voltage Differential Signaling, i.e., hardware slot LVDS). The LVDS has a high transmission rate, a large bandwidth, and a good image signal, and is more adaptive to a new movie format (here, the FPGA chip, the MCU, GPU or ARM processor, and the LVDS interface technology are not described any more in the example of the present invention).

As a feasible example, the above-mentioned image processing electronic circuit can also be integrated with other function units, for example, consisting of a high-speed image input/output interface unit, a high-speed data cache unit, a storage control unit, an image optimization acceleration engine, and a system control unit.
(1) The system interface unit carries out interaction of parameters and command states of the image optimization processing unit and may consist of a USB interface controller and FPGA control logic corresponding thereto. The system interface unit receives a control command sent from an external device while transmitting a state parameter to the external device to feed back a real-time operation state of the system.
(2) The high-speed image input/output interface unit and the high-speed data cache unit are configured as: the high-speed image input/output interface unit carries out data interaction with an external interface; the high-speed data cache unit performs high speed caching on high-speed video data inputted from the front end after the video data being sub-packaged, and then carries out data interaction with the storage module in a direct memory access (DMA) manner.
(3) The storage control unit realizes the functions of efficient control and routing distribution of a storage array of a static memory SRAM and a dynamic memory DRAM, depending on the specific application requirements of the image optimization. It is necessary for the control unit to comprehensively consider storage performance, data security and storage cost, to ensure the security of data storage, and the current preliminary scheme is intended to use the QDR+DDR mode.
(4) The high performance acceleration engine carries out the functions of address management and real-time operation of three-way data by a high performance embedded processor of the FPGA and rich logic resources thereof.
(5) The image-processing-unit-command control unit carries out centralized control and interactive communication of individual modules inside the image processing unit.

Preferably, as a feasible embodiment, the projector system further comprises a video input module, a video output module, and a data bus interface.

The image optimization processing module is provided between the video input module and the video output module, and electrically connected to the video input module and the video output module respectively, via the data bus interface.

The video output module is configured for receiving the optimized image information outputted by the image optimization processing module and transmitting and finally projecting the optimized image information to the screen; and
the data bus interface includes an LVDS interface.

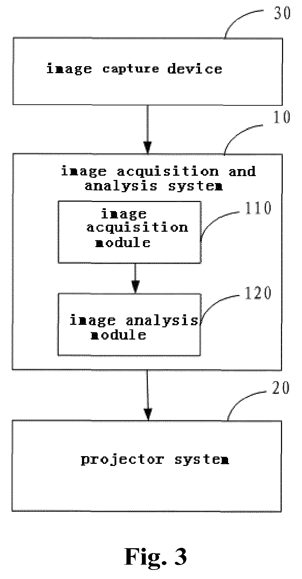

Referring to Fig. 3 for more details, preferably, as a feasible embodiment, the above-mentioned digital movie projection system further comprises an image capture device 30. The image acquisition and analysis system 10 comprises an image acquisition module 110 and an image analysis module 120, wherein
the image acquisition module 110 is configured for driving an external device, such as the image capture device 30, to acquire real projected image information on the screen and transmitting the acquired real projected image information to the image analysis module 120; and
the image analysis module 120 is configured for receiving the real projected image information transmitted by the image acquisition module 110, analyzing the real projected image information, creating an image optimization processing parameter and transmitting the image optimization processing parameter to the image optimization processing module of the projector system 20. Here, the image capture or camera device acquires the image information at the projection display end (for example, an auditorium, a projection booth, or the like) of the projector system 20.

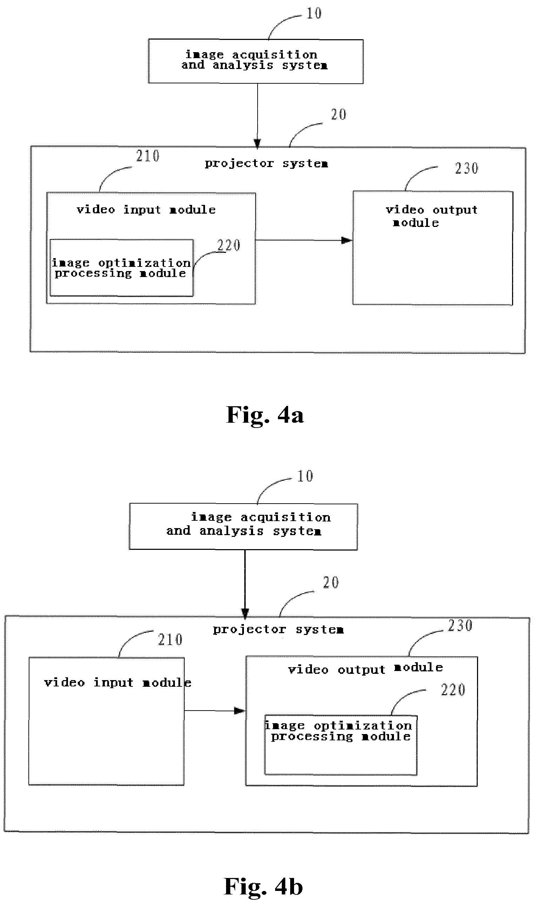

Optionally, as shown in Fig. 4a, the image optimization processing module 220 may be integrated in the video input module 210 and electrically connected to the video output module 230 via a confidential data bus (for example, LVDS); and alternatively, the image optimization processing module 220 is integrated in the video output module 230 as shown in Fig. 4b and electrically connected to the video input module 210 via a confidential data bus (for example, LVDS).

After the integration, a unified hardware circuit board is formed, and physical connections or circuits between the image optimization processing module 220 and the video input and output modules are simpler, more confidential and stable.

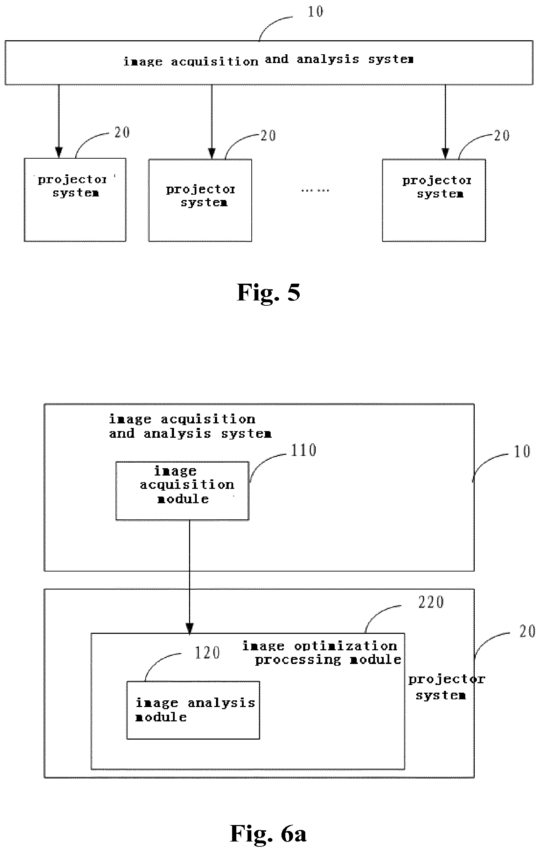

Optionally, as shown in Fig. 5, the image acquisition and analysis system 10 for acquiring and analyzing a real projected picture to obtain parameter information may be connected to a plurality of projector systems 20 and the image acquisition and analysis system 10 may transmit the same or different parameter information to the individual projector systems depending on the actual states of the projector systems.

Projection by the plurality of projector systems in combination can achieve quality improvement such as increase in picture resolution and increase in brightness.

Optionally, as shown in Fig. 6a, the image analysis module of the image acquisition and analysis system 10 may be built in the image optimization processing module 220 of the projector system 20.

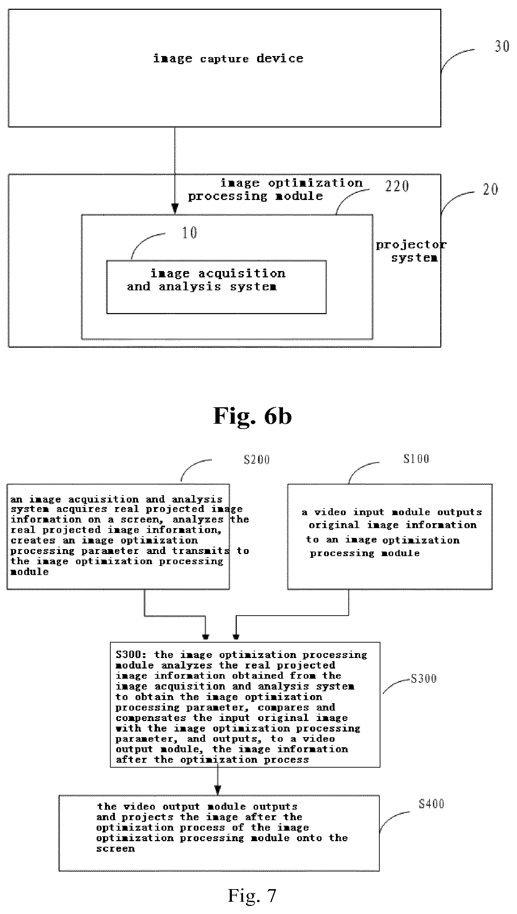

Optionally, as shown in Fig. 6b, the image acquisition and analysis system 10 may be built in the image optimization processing module 220 of the projector system 20 and electrically connected to an external image acquisition device.

Optionally, two projectors may be used, with the video input module performing video signaling and communication connection in serial mode, that is to say, two projectors share one video input module. Also the image optimization processing module may be used in serial mode, that is to say, two projectors share one image optimization processing module for control.

In addition, in the case where the plurality of projector systems are used simultaneously, a synchronization signal, in the prior art, is transmitted by one server to the plurality of projector systems respectively, while in the present invention:
the synchronization of the synchronous projection may also be optionally realized by a synchronization signal generator connected to synchronization signal input interfaces of the video input modules 210 of the plurality of projector systems.

Optionally, the synchronization of the synchronous projection may also be realized by a synchronization signal generator connected to synchronization signal input interfaces of the video output modules 230 of the plurality of projector systems.

Optionally, the synchronization of the synchronous projection may also be realized by a synchronization signal generator connected to synchronization signal input interfaces of the image optimization processing modules 220 of the plurality of projector systems.

Optionally, the synchronization signal may be loaded to the video input or output end of the image optimization processing module 220 by which the synchronous projection of a movie is controlled.

Optionally, the synchronization signal may be loaded to the video output end of the video input module 210 by which the synchronous projection of a movie is controlled.

Optionally, the synchronization signal may be loaded to the video output end of the video output module 230 by which the synchronous projection of a movie is controlled.

The digital movie projection system of the present invention has at least the following advantages.

The digital movie projection system according to the example of the present invention can have the function of excellently optimizing the brightness, chromaticity and registration of an image when multiple projectors are projecting a 2D or 3D picture.

In the digital movie projection system according to the example of the present invention, the image processing unit and the IMB are provided in a projector, with high integration level, a reliable structure and stable operation, and therefore data is transmitted more confidentially. By the direct connection of image signals, the digital movie projection system has a very high bandwidth and is more compatible with a future high-tech format, such as high frame rate and high resolution, of a new movie.

The digital movie projection system according to the example of the present invention is excellent in system stability and is greatly reduced in operation temperature.

According to the same inventive concept, the present invention also provides a digital movie projection method. Since the method solves the problem based on a principle similar to the function of the digital movie projection system previously described, the method can be carried out by the function modules of the previously described system and the description thereof is not repeated here.

Referring to Fig. 7, the example of the present invention also provides a digital movie projection method comprising the following steps:
Step S100, a video input module outputting original image information to an image optimization processing module;
Step S200, an image acquisition and analysis system acquiring real projected image information on a screen, analyzing the real projected image information, creating an image optimization processing parameter and transmitting the image optimization processing parameter to the image optimization processing module;
Step S300, the image optimization processing module analyzing the real projected image information obtained from the image acquisition and analysis system to obtain the image optimization processing parameter, comparing and compensating the input original image with the image optimization processing parameter, and outputting, to a video output module, the image information after the optimization process; and
Step S400, the video output module outputting and projecting, onto the screen, the image after the optimization process of the image optimization processing module.

Preferably, as a feasible embodiment, in the above-mentioned Step S200, the operation of the image acquisition and analysis system acquiring, analyzing, and transmitting the result to the image optimization processing module includes the following steps:
Step S210, acquiring and obtaining image information for analysis by means of projecting a test signal before projection; or/and Step S220, performing an operation of acquiring a projected picture discontinuously or in real-time during the projection to obtain the image information for analysis (i.e., acquiring and obtaining information for analysis and creation of the image optimization processing parameter by projecting a test signal before projection; or/and performing an operation of acquiring a projected picture discontinuously or in real-time during the projection to obtain the information for analysis and creation of the image optimization processing parameter); and
Step S230, an image capture device, during the acquisition of the real projected image information, capturing the real image information projected on the screen, and outputting the real projected image information and the processing parameter obtained by analysis, to the image optimization processing module, for the optimization process.

Here, the projected image and information on the screen which are captured by the image capture device are optionally outputted via a USB or a network cable to the image acquisition and analysis system 10 for analysis and transmission to the optimization processing module 220 of the projector system 20, or
optionally, the projected image and information on the screen which are captured by the image capture device are transmitted via a USB or a network cable directly to the image optimization processing module 220 (for example Fig. 6) for analysis and modeling processing.

Here, Step S100 and Step S200 can be performed synchronously. During the projection of the digital movie, the projected image information in the Step S300 is continuously acquired and analyzed by the image acquisition and analysis system 10 in the Step S200, and the real projected image information is transmitted to the image optimization processing module 220 so as to be compared in terms of index parameters with the original image information transmitted in the Step S100, achieving compensation, to realize the optimization. With such repeated dynamic cycle, high picture quality of the projected image is ensured.

The above-mentioned examples are merely preferred examples of the present invention and are not intended to limit the present invention, and it would be understood by those skilled in the art that various modifications and variations can be made to the present invention. Any modifications, equivalent alternations, improvements and so on made without departing from the spirit and principle of the present invention should be included in the scope of the present invention.

## Claims

1. A digital movie projection system, **characterized by** comprising a projector system and an image acquisition and analysis system,
wherein the projector system is provided therein with a video input module, a video output module, and an image optimization processing module; and the image optimization processing module is electrically connected to the video input module, the video output module, and the image acquisition and analysis system provided outside the projector system, respectively;
the image acquisition and analysis system is configured for acquiring real projected image information on a screen, analyzing the real projected image information, and transmitting to the image optimization processing module;
the video input module inputs original video and information to the image optimization processing module;
the image optimization processing module is configured for analyzing the real projected image information obtained from the image acquisition and analysis system to obtain an image optimization processing parameter, comparing and compensating the input original image with the image optimization processing parameter, and transmitting, to the video output module, the image information after the optimization process;
the video output module is configured for outputting and projecting, onto the screen, the image after the optimization process of the image optimization processing module;
the video input module includes an IMB integrated media module; and
the video output module includes an ICP integrated control module.

2. The digital movie projection system according to claim 1, **characterized in that**
the image optimization processing module comprises an optimization processing parameter obtaining unit, an image input unit, an image optimization processing unit, and an image output unit,
wherein the optimization processing parameter obtaining unit is configured for obtaining an image optimization processing parameter from the image acquisition and analysis system, and outputting the image optimization processing parameter to the image optimization processing unit;
the image input unit is configured for obtaining original image information from the video input module of the projector system, and outputting the original image information to the image optimization processing unit; and
the image optimization processing unit is configured for comparing and compensating the original image information outputted from the image input unit with the parameter outputted from the optimization processing parameter obtaining unit, and outputting, by the image output unit, the image information after the optimization process.

3. The digital movie projection system according to claim 2, **characterized in that**
the projector system further comprises a data bus interface;
the image optimization processing module is provided between the video input module and the video output module, and the image optimization processing module is electrically connected to the video input module and the video output module via the data bus interface respectively;
the video output module is configured for receiving the optimized image information outputted by the image optimization processing module and transmitting and finally projecting the optimized image information onto the screen; and
the data bus interface includes an LVDS interface.

4. The digital movie projection system according to claim 3, **characterized in that**
the image optimization processing module includes an FPGA, MCU, GPU, or ARM processor.

5. The digital movie projection system according to claim 1, **characterized in that**
the image optimization processing parameter includes an image capture parameter, brightness, color uniformity, geometrical shape, image sharpness, and contrast ratio.

6. The digital movie projection system according to claim 4, **characterized by** further comprising an image capture device,
wherein the image acquisition and analysis system comprises an image acquisition module and an image analysis module,
wherein the image acquisition module is configured for driving the image capture device to acquire real projected image information on the screen and transmitting the acquired real projected image information to the image analysis module; and
the image analysis module is configured for receiving the real projected image information transmitted by the image acquisition module, analyzing the real projected image information, creating an image optimization processing parameter and transmitting the image optimization processing parameter to the image optimization processing module of the projector system.

7. A digital movie projection method, **characterized by** comprising steps of:
a video input module outputting original image information to an image optimization processing module;
an image acquisition and analysis system acquiring real projected image information on a screen, analyzing the real projected image information, creating an image optimization processing parameter and transmitting the image optimization processing parameter to the image optimization processing module;
the image optimization processing module performing comparison and compensation with the parameter obtained from the real projected image information, and transmitting the optimized image information;
the image optimization processing module analyzing the real projected image information obtained from the image acquisition and analysis system to obtain the image optimization processing parameter, comparing and compensating the input original image with the image optimization processing parameter, and outputting, to a video output module, the image information after the optimization process; and
the video output module outputting and projecting onto the screen the image after the optimization process of the image optimization processing module.

8. The digital movie projection method according to claim 7, **characterized in that**
the step of the image acquisition and analysis system acquiring real projected image information on a screen, analyzing the real projected image information, creating an image optimization processing parameter and transmitting the image optimization processing parameter to the image optimization processing module includes steps of:
acquiring and obtaining information for analysis and creation of the image optimization processing parameter by means of projecting a test signal before projection; or/and performing an operation of acquiring a projected picture discontinuously or in real-time during the projection to obtain the information for analysis and creation of the image optimization processing parameter; and
an image capture device capturing, during the acquisition of the real projected image information, the real projected image information on the screen, and outputting the real projected image information and the processing parameter obtained by analysis to the image optimization processing module, for the optimization process.
